# EUROPEAN PATENT APPLICATION

(11) **EP 4 585 337 A1**
(43) Date of publication of application: **16.07.2025**
(21) Application number: 24150977.7
(22) Date of filing: 09.01.2024
(51) Int. Cl.: B23B 51/00, B23B 51/06, B25B 27/20

(54) **METHOD FOR ATTACHING A REPLACEABLE CUTTING HEAD TO OR RELEASING IT FROM AN ELONGATED TOOL BODY OF A ROTARY CUTTING TOOL**

(71) Applicant: AB Sandvik Coromant, 811 81 Sandviken (SE)
(72) Inventor: ENGSTRÖM, Tord, 811 81 Sandviken (SE)
(74) Representative: Sandvik

(57) **Abstract**

A method for attaching a replaceable cutting head (30) to or releasing it from a tool body (2) of a rotary cutting tool, wherein the cutting head has a coupling portion that is rotatable in relation to coupling legs (12) on the tool body into press fit engagement with internal clamping surfaces on the coupling legs. In order to facilitate the rotation of the cutting head in relation to the coupling legs between a disengagement position and an engagement position, the upper ends (12a) of the coupling legs are pressed radially outwards in opposite directions by means of a force-applying implement (50) and the pressing force on the coupling legs is maintained during the rotation of the cutting head. The force-applying implement is connected to the coupling legs by inserting male-shaped force transmitting members (51a, 51b) into a coolant channel in a respective coupling leg through a coolant channel outlet opening (8a) of the coolant channel.

## Description

### FIELD OF THE INVENTION AND PRIOR ART

The present invention relates to a method according to the preamble of claim 1 for attaching a replaceable cutting head to or releasing it from an elongated tool body of a rotary cutting tool.

Rotary cutting tools, such as drilling tools, may be composed of two separate parts, including an elongated tool body and a cutting head that is detachably attachable to the tool body at the front end thereof and thereby constitutes a replaceable tip of the cutting tool, wherein the cutting edges of the cutting tool are provided on the replaceable cutting head. Hereby, the major part of the cutting tool constituted by the tool body can be made of a comparatively inexpensive material, such as steel, whereas the smaller cutting head can be made of a harder and more expensive material, such as cemented carbide. Thus, the tool body is normally made of a softer and more deformable material than the cutting head. In a cutting tool of this type, the replaceable cutting head constitutes a wear part that makes contact with the workpieces and is subjected to wear during machining thereof and that can be discarded and replaced with a new cutting head when it has been worn out, whereas the tool body is intended to be re-used with new cutting heads multiple times.

In a rotary cutting tool with replaceable cutting head, the tool body may be provided with two axially projecting coupling legs at its front end, wherein the cutting head has a coupling portion that is configured to be received in a space between the coupling legs. In this type of rotary cutting tool, the coupling portion of the cutting head may be configured to be fixed to the coupling legs of the tool body by press fit, as illustrated for instance in US 8 430 609 B2, wherein the coupling portion of the cutting head is rotatable in said space between the coupling legs between a disengagement position, in which external clamping surfaces on the coupling portion of the cutting head are disengaged from corresponding internal clamping surfaces on the coupling legs and the torque surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque surfaces on the cutting head abut against the corresponding torque transfer surfaces on the coupling legs. Hereby, the cutting head may be attached to and released from the tool body in a simple and quick manner by being rotated in relation to the tool body about the centre axis of the cutting head. In a rotary cutting tool of this type, the mutual clamping surfaces on the coupling legs of the tool body and the coupling portion of the cutting head may be conical and widen in the direction towards the rear end of the tool body and the cutting head, respectively, as illustrated in US 5 988 953 A. As an alternative, the mutual clamping surfaces on the coupling legs of the tool body and the coupling portion of the cutting head may be cylindrical, as illustrated in US 8 430 609 B2, wherein the cylindrical internal clamping surface on each coupling leg extends in parallel with the centre axis of the tool body and each one of the cylindrical external clamping surfaces on the coupling portion of the cutting head extends in parallel with the centre axis of the cutting head.

During the above-mentioned rotation of the cutting head from the disengagement position to the engagement position, the coupling legs are subjected to a slight elastic deflection radially outwards, i.e. a slight elastic bending in relation to the centre axis of the tool body, which in its turn implies that the coupling legs will exert a resilient clamping force on the coupling portion of the cutting head when the coupling portion of the cutting head is in the engagement position and thereby keep the cutting head attached to the tool body. During each rotation of a cutting head from the disengagement position to the engagement position, i.e. each time a worn out cutting head is replaced with a new cutting head, the internal clamping surfaces on the coupling legs are subjected to deformation, by wear and embossing, by the corresponding external clamping surfaces on the cutting head, which is of harder and more wear-resistant material than the tool body. The internal clamping surfaces on the coupling legs may also be subjected to some wear and embossing at the interface with the corresponding external clamping surfaces on the cutting head during the machining of workpieces. When the deformation of the internal clamping surfaces on the coupling legs has reached a certain level after a number of cutting head replacements, the coupling legs will no longer be able to exert the desired clamping force on the coupling portion of the cutting head, which implies that the tool body has to be discarded.

### OBJECT OF THE INVENTION

The object of the present invention is to provide a way of reducing the deformation of the internal clamping surfaces on the coupling legs of a tool body included in a rotary cutting tool of the above-mentioned type.

### SUMMARY OF THE INVENTION

According to the invention, said object is achieved by means of a method having the features defined in claim 1.

The method according to the present invention is to be used for attaching a replaceable cutting head to or releasing it from an elongated tool body of a rotary cutting tool of the type where:
- the tool body has a rear end configured for attachment to a machine and an opposite front end, wherein a longitudinal centre axis of the tool body extends between the rear end and the front end of the tool body;
- the tool body at its front end has a coupling portion with two coupling legs projecting in the axial direction of the tool body and arranged opposite to each other on opposite sides of the centre axis of the tool body, wherein each coupling leg has an upper end with an upper end face, and wherein a coolant channel extends axially through each coupling leg and opens into the upper end face of the coupling leg through a coolant channel outlet opening provided in this upper end face;

- the cutting head has a coupling portion, which is designed for engagement with the coupling portion of the tool body and which is receivable in a space between said coupling legs, wherein two convex external clamping surfaces are provided on the coupling portion of the cutting head opposite to each other on opposite sides of a centre axis of the cutting head, wherein these external clamping surfaces are configured to be in press fit engagement with an internal clamping surface on an inner side of a respective one of the coupling legs when the cutting head is attached to the tool body;
- each coupling leg is provided with a torque transfer surface for transferring torque from the tool body to the cutting head, which torque transfer surface is configured to abut against a corresponding torque surface on the cutting head when the cutting head is attached to the tool body with the coupling portion of the cutting head received in said space between the coupling legs; and
- the coupling portion of the cutting head is rotatable in said space between the coupling legs about the centre axis of the cutting head between a disengagement position, in which the external clamping surfaces on the coupling portion of the cutting head are disengaged from the internal clamping surfaces on the coupling legs and the torque surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque surfaces on the cutting head abut against the corresponding torque transfer surfaces on the coupling legs.

The method according the invention comprises the steps of:
a) connecting a force-applying implement to the coupling legs by inserting a first male-shaped force transmitting member of the force-applying implement into an end section of the coolant channel in one of the coupling legs through the coolant channel outlet opening of this coolant channel and inserting a second male-shaped force transmitting member of the force-applying implement into an end section of the coolant channel in the other one of the coupling legs through the coolant channel outlet opening of this coolant channel;
b) actuating the force-applying implement to apply pressing force on the coupling legs through the first and second force transmitting members to thereby press the upper ends of the coupling legs radially outwards in opposite directions; and
c1) when the cutting head is to be attached to the tool body, rotating the coupling portion of the cutting head in said space between the coupling legs from said disengagement position to said engagement position while maintaining said pressing force on the coupling legs by the force-applying implement, and thereafter actuating the force-applying implement to release the pressing force on the coupling legs and disconnecting the force-applying implement from the coupling legs, or
c2) when the cutting head is to be released from the tool body, rotating the coupling portion of the cutting head in said space between the coupling legs from said engagement position to said disengagement position while maintaining said pressing force on the coupling legs by the force-applying implement, and thereafter removing the cutting head from the tool body by moving the coupling portion of the cutting head out of said space between the coupling legs.

Thus, when the cutting head is to be attached to or released from the tool body, the upper ends of the coupling legs are pressed radially outwards in opposite directions by means of the force-applying implement before a rotation of the cutting head in relation to the tool body is effected, wherein the upper ends of the coupling legs are maintained in such a pressed-out position during the rotation of the cutting head in relation to the tool body. Hereby, the contact forces between the internal clamping surfaces on the coupling legs and the external clamping surfaces on the coupling portion of the cutting head are reduced during the rotation of the coupling portion of the cutting head from the disengagement position to the engagement position or from the engagement position to the disengagement position, which in its turn implies that the deformation of the internal clamping surfaces on the coupling legs in connection with such a rotation of the coupling portion of the cutting head is reduced, and the useful life of the tool body is thereby increased. Said reduction of the contact forces between the internal clamping surfaces on the coupling legs and the external clamping surfaces on the coupling portion of the cutting head also implies that it may be possible for a user of the rotary cutting tool to effect the rotation of cutting head in relation to the tool body directly with the fingers without having to use any implement in the form of a key or the similar that is temporarily connected to the cutting head through notches or the similar in the cutting head. Furthermore, the reduction of the contact forces between the internal clamping surfaces on the coupling legs and the external clamping surfaces on the coupling portion of the cutting head in connection with the attachment of the cutting head to the tool body, or in connection with the release of the cutting head from the tool body, also implies that it will be possible to allow a larger elastic deflection of the coupling legs while still enabling a convenient rotation of the cutting head between the disengagement position and the engagement position with a moderate force. An increased elastic deflection of the coupling legs will in its turn imply that the internal clamping surfaces on the coupling legs can be subjected to more wear and embossing before losing their ability to exert the desired clamping force on the coupling portion of the cutting head, and the useful life of the tool body is thereby further increased. An increased elastic deflection of the coupling legs also implies reduced tolerance requirements with respect to the internal and external clamping surfaces.

According to an embodiment of the invention, a force-applying implement in the form of a pair of expanding pliers is used as the force-applying implement in said steps.

According to another embodiment of the invention, the force-applying implement is actuated in step b by means of a manually actuated screw mechanism included in the force-applying implement.

According to another embodiment of the invention, the force-applying implement is configured to apply pressing force on the coupling legs through the first and second force transmitting members in step b by moving the first and second force transmitting members in opposite directions away from each other.

Further advantageous features of the method according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a rotary cutting tool with a tool body and a cutting head detachably attached to the tool body,
- Fig 2: is a front end view of the rotary cutting tool of Fig 1,
- Figs 3a and 3b: are perspective views from different directions of a front part of the rotary cutting tool of Fig 1, with the cutting head and the tool body shown separated from each other,
- Fig 4: is a cut through a front part of the rotary cutting tool according to the line IV-IV in Fig 2,
- Fig 5: is a cut through a front part of the tool body corresponding to Fig 4, but with the cutting head removed,
- Fig 6: is a front end view of the tool body included in the rotary cutting tool of Fig 1,
- Fig 7: is a cut through a front part of the tool body according to the line VII-VII in Fig 6,
- Figs 8a and 8b: are perspective views from different directions of the cutting head included in the rotary cutting tool of Fig 1,
- Fig 8c: is a lateral view of the cutting head of Figs 8a and 8b,
- Fig 8d: is a plan view from above of the cutting head of Figs 8a and 8b,
- Fig 9a: is a lateral view of a front part of the rotary cutting tool of Fig 1, with a coupling portion of the cutting head shown in the disengagement position,
- Fig 9b: is a cut according to the line IXb-IXb in Fig 9a,
- Fig 10a: is a lateral view corresponding to Fig 9a, with the coupling portion of the cutting head shown in the engagement position,
- Fig 10b: is a cut according to the line Xb-Xb in Fig 10a,
- Figs 11a and 11b: are perspective views from different directions of a force-applying implement suitable for use in a method according to the present invention,
- Fig 12: is a lateral view of a part of a force-applying implement according to an alternative variant connected to the tool body included in the rotary cutting tool of Fig 1,
- Figs 13a-13d: are perspective views of the rotary cutting tool of Fig 1 and the force-applying implement of Figs 11a and 11b, illustrating different steps in a process of attaching the cutting head to the tool body, and
- Figs 14a-14d: are perspective views of the rotary cutting tool of Fig 1 and the force-applying implement of Figs 11a and 11b, illustrating different steps in a process of removing the cutting head from the tool body.

### DETAILED DESCRIPTION OF EMBODIMENTS OF THE INVENTION

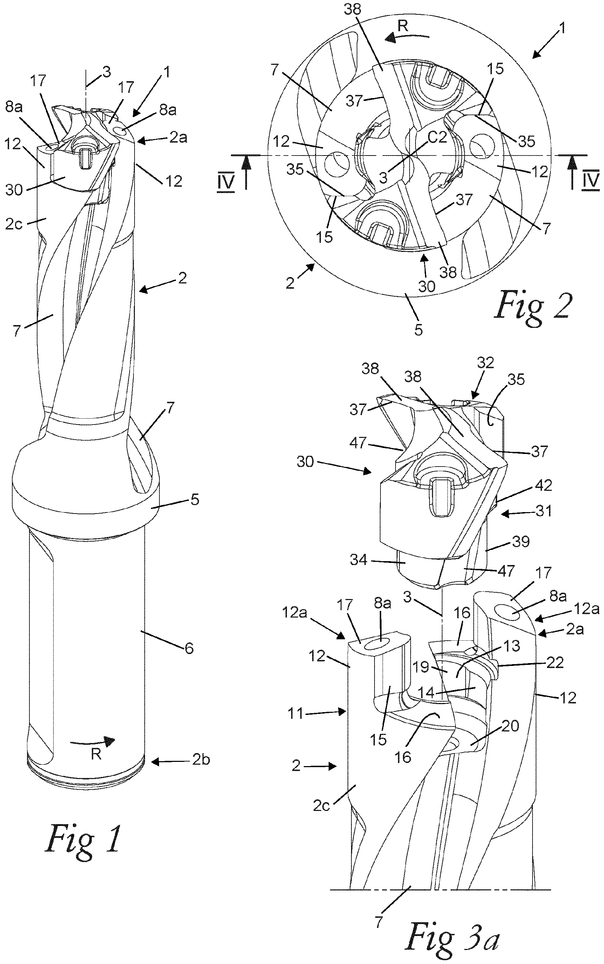

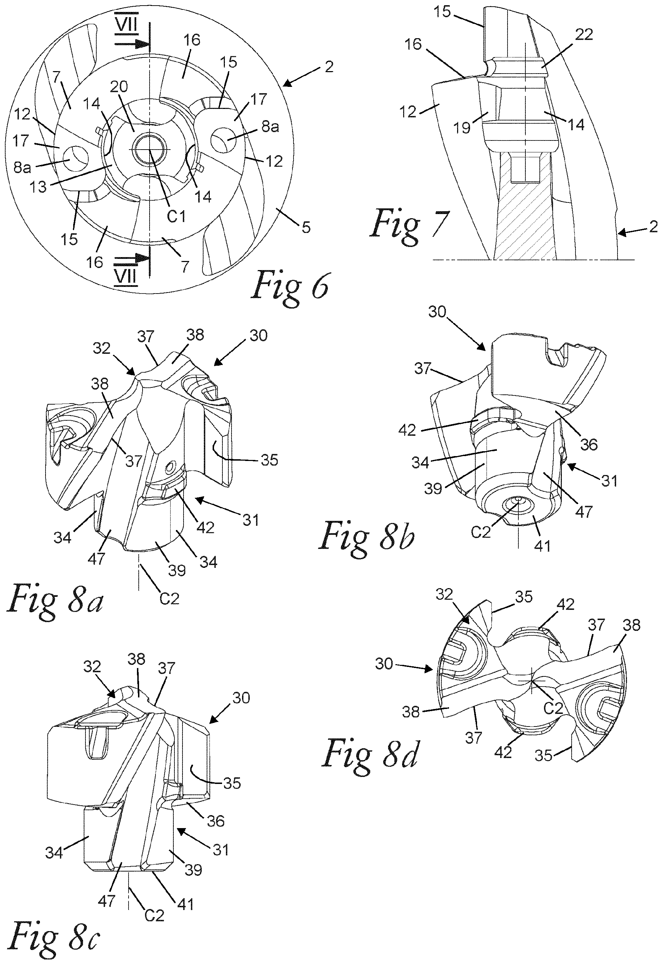

The method according to the present invention is to be used for attaching a replaceable cutting head 30 to or releasing it from an elongated tool body 2 of a rotary cutting tool 1, which rotary cutting tool 1 is intended to be rotated for machining of a workpiece by cutting and which for instance may be of the type illustrated in Figs 1-10. In the illustrated example, the rotary cutting tool 1 is designed as a twist drill, but the rotary cutting tool could also be designed as another type of tool for rotary cutting machining.

The cutting tool 1 comprises an elongated tool body 2 and a replaceable cutting head 30 detachably attachable to the tool body 2 at a front end thereof. In Fig 1, the cutting tool 1 is shown with the cutting head 30 mounted to the tool body 2 and with the cutting tool 1 ready for machining of a workpiece. The cutting tool 1 is configured to be rotated about an axis of rotation 3. The intended direction of rotation of the cutting tool 1 for machining is marked with the arrow R in Figs 1, 2 and 9b. The direction of rotation R constitutes the direction in which the cutting tool 1 is intended to be rotated about the axis of rotation 3 in order to achieve cutting machining of a workpiece.

The cutting head 30 is made of hard and wear-resistant material, preferably cemented carbide, and the tool body 2 is preferably made of steel or other suitable metallic material.

The tool body 2 has a front end 2a and an opposite rear end 2b. A longitudinal centre axis C1 of the tool body 2 extends between the rear end 2b and the front end 2a of the tool body, wherein this centre axis C1 coincides with the axis of rotation 3 of the cutting tool 1. In the illustrated example, a collar 5 is provided on the tool body 2. A rear part 6 of the tool body 2 located between the collar 5 and the rear end 2b forms a connection member, through which the tool body 2 is mountable, directly or via an intermediate tool holder, to a rotating spindle or the similar of a drilling machine or other type of machine tool. The tool body 2 has a peripheral surface 2c. In the illustrated example, the tool body 2 has 180° rotational symmetry about the centre axis C1 of the tool body and the cutting head 30 has 180° rotational symmetry about a centre axis C2 of the cutting head. The centre axis C2 of the cutting head 30 coincides with the axis of rotation 3 of the cutting tool 1 when the cutting head 30 is attached to the tool body 2.

At its front end 2a, the tool body 2 has a coupling portion 11 designed for engagement with a corresponding coupling portion 31 of the cutting head 30. The coupling portion 11 of the tool body 2 comprises two elastically bendable coupling legs 12, which project in the axial direction of the tool body 2 and are arranged opposite to each other on opposite sides of the centre axis C1 of the tool body. Between the coupling legs 12, there is a space 13 designed for receiving the coupling portion 31 of the cutting head 30. Two internal clamping surfaces 14 are provided in said space 13 opposite to each other on opposite sides of the centre axis C1 of the tool body 2, wherein these internal clamping surfaces 14 are formed on an inner side of a respective one of the coupling legs 12. The inner side of a coupling leg 12 here refers to the side of the coupling leg that faces towards the centre axis C1 of the tool body 2. Each internal clamping surface 14 is concave as seen in every cross-sectional plane through the coupling legs 12 that is perpendicular to the centre axis C1 of the tool body 2 and intersects the internal clamping surfaces 14. In the illustrated example, the internal clamping surfaces 14 are cylindrical.

The cutting head 30 has a coupling portion 31, which is designed for engagement with the coupling portion 11 of the tool body 2 and which is receivable in the above-mentioned space 13 between the coupling legs 12. Two external clamping surfaces 34 are provided on the coupling portion 31 of the cutting head 30 opposite to each other on opposite sides of the centre axis C2 of the cutting head 30. Each external clamping surface 34 is convex as seen in every cross-sectional plane through the cutting head 30 that is perpendicular to the centre axis C2 of the cutting head and intersects the external clamping surfaces 34. In the illustrated example, the external clamping surfaces 34 are cylindrical.

The external clamping surfaces 34 on the cutting head 30 are configured to be in press fit engagement with a respective one of the internal clamping surface 14 on the coupling legs 12 when the cutting head 30 is attached to the tool body 2. Thus, the shape of each external clamping surface 34 is so adapted to the shape of the associated internal clamping surface 14 that it will mate with the associated internal clamping surface 14 and make contact with it with press fit, also known as interference fit of friction fit, when the coupling portion 31 of the cutting head 30 is in engagement with the coupling portion 11 of the tool body 2.

Each coupling leg 12 is provided with a torque transfer surface 15 for transferring torque from the tool body 1 to the cutting head 30, which torque transfer surface 15 is designed for abutment against a corresponding torque surface 35 on the cutting head 30 in order to transfer torque from the tool body 2 to the cutting head 30 during rotation of the cutting tool 1 in the intended direction of rotation R.

One or more forwardly facing axial support surfaces 16 are also provided at the front part of the tool body 2 on the coupling legs 12 or between the coupling legs 12, wherein each such axial support surface 16 is designed for abutment against a corresponding axial abutment surface 36 on the cutting head 30 in order to support the cutting head 30 in axial direction and carry axial forces when the cutting head 30 is pressed against a workpiece. In the illustrated example, each one of the coupling legs 12 is provided with such an axial support surface 16 that is configured to abut against a corresponding axial abutment surface 36 on the cutting head 30 when the cutting head it attached to the tool body 2. In the illustrated example, the axial support surface 16 of each coupling leg 12 is slightly inclined in relation to a cross-sectional plane through the coupling legs 12 that is perpendicular to the centre axis C1 of the tool body 2. However, the axial support surface 16 of each coupling leg 12 may as an alternative extend perpendicularly to the centre axis C1 of the tool body 2.

At its front end, the detachable and replaceable cutting head 30 has a cutting portion 32, which is provided with at least one cutting edge 37 that extends in a substantially radial direction of the cutting head 30. In the illustrated example, the cutting head 30 is provided with two such cutting edges 37. A clearance surface 38 is arranged on the cutting portion 32 behind each cutting edge 37, as seen in the intended direction of rotation R of the cutting tool 1. The above-mentioned coupling portion 31 of the cutting head 30, which is receivable in the space 13 between the coupling legs 12, is located below the cutting portion 32. The above-mentioned external clamping surfaces 34 are provided on the coupling portion 31 of the cutting head 30 on either side of the centre axis C2 of the cutting head 30. Furthermore, the coupling portion 31 of the cutting head 30 is provided with two torque surfaces 35 arranged on opposite sides of the centre axis C2 of the cutting head, each of which being designed for abutment against the torque transfer surface 15 on one of the coupling legs 12 of the tool body 2. The coupling portion 31 of the cutting head 30 is also provided with two axial abutment surfaces 36 arranged on opposite sides of the centre axis C2 of the cutting head, each of which being designed for abutment against the axial support surface 16 on one of the coupling legs 12 of the tool body 2.

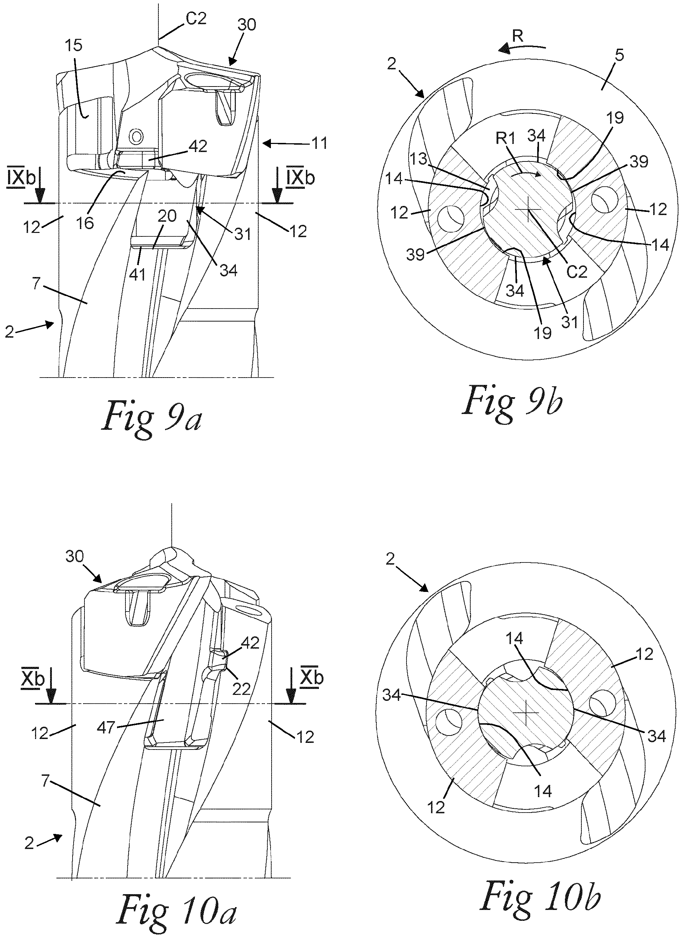

The coupling portion 31 of the cutting head 30 is, when received in the space 13 between the coupling legs 12 of the tool body 2, rotatable in this space 13 about the centre axis C2 of the cutting head 30 between:
- a disengagement position (see Figs 9a and 9b), in which the external clamping surfaces 34 on the coupling portion 31 of the cutting head 30 are disengaged from the internal clamping surfaces 14 on the coupling legs 12 and the torque surfaces 35 on the cutting head 30 are separated from the corresponding torque transfer surfaces 15 on the coupling legs 12, and
- an engagement position (see Figs 10a and 10b), in which the external clamping surfaces 34 on the coupling portion 31 of the cutting head 30 are in press fit engagement with the internal clamping surfaces 14 on the coupling legs 12 and the torque surfaces 35 on the cutting head 30 abut against the corresponding torque transfer surfaces 15 on the coupling legs 12.

The rotation of the coupling portion 31 of the cutting head 30 from said disengagement position to said engagement position is effected by a rotation of the cutting head 30 about its centre axis C2 and in relation to the tool body 2 in a direction of rotation R1 (see Fig 9b) opposite to the intended direction of rotation R of the cutting tool 1. The rotation of the coupling portion 31 of the cutting head 30 from the engagement position to the disengagement position is effected by a rotation of the cutting head 30 about its centre axis C2 and in relation to the tool body 2 in the opposite direction.

When the coupling portion 31 of the cutting head 30 is in said disengagement position in the space 13 between the coupling legs 12, the cutting head 30 can be moved in axial direction out of the space 13 between the coupling legs 12 and away from the tool body 2. When the coupling portion 31 of the cutting head 30 is in said engagement position in the space 13 between the coupling legs 12, the cutting head 30 is locked to the tool body 2 and the cutting tool 1 is ready for machining of a workpiece.

In order to facilitate the rotation of the cutting head 30 from the disengagement position to the engagement position, the coupling portion 31 of the cutting head 30 may be provided with two guide surfaces 39 arranged opposite to each other on opposite sides of the centre axis C2 of the cutting head, wherein these guide surfaces 39 adjoin to a respective one of the external clamping surfaces 34 on the coupling portion 31 of the cutting head and is arranged in front of the associated external clamping surface 34 as seen in the above-mentioned direction of rotation R1. In order to guide the external clamping surfaces 34 into engagement with the internal clamping surfaces 14 during the rotation of the coupling portion 31 of the cutting head 30 into the engagement position, a guide surface 19 is also provided on the inner side of each coupling leg 12 in front of the internal clamping surface 14 on the coupling leg as seen in the intended direction of rotation R of the cutting tool 1.

Two chip flutes 7 are formed in the peripheral surface 2c of the tool body 2 and extend, preferably helically, diametrically opposite each other and alongside of each other along a part of the tool body 2 from the collar 5 and up to the coupling portion 11 of the tool body. Each one of these chip flutes 7 extends up to an area between the two coupling legs 12 and is configured to connect to a corresponding chip flute 47 on the outside of the cutting head 30 when the coupling portion 31 of the cutting head is in the engagement position in the space 13 between the coupling legs 12. The chip flutes 7, 47 could alternatively be rectilinear instead of helical. The chip flutes 7, 47 are intended to carry away the chips generated by the cutting edges 37 during machining of a workpiece.

A coolant channel 8 extends axially through each coupling leg 12 and opens into an upper end face 17 of the coupling leg through a coolant channel outlet opening 8a provided in this upper end face 17. Said upper end face 17 of the coupling leg 12 is provided at a free upper end 12a of the coupling leg.

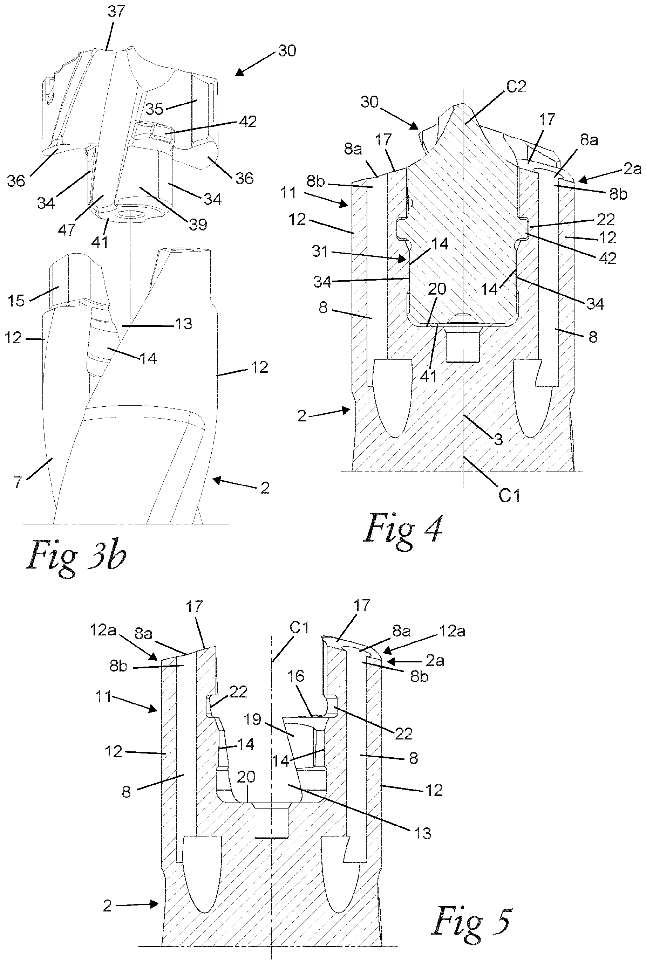

The space 13 between the coupling legs 12 has a bottom surface 20 that is formed in the tool body 2 and that extends between the coupling legs 12. The distance in axial direction between the bottom surface 20 of the space 13 and each axial support surface 16 on the coupling legs 12 is suitably somewhat larger than the distance in axial direction between a bottom surface 41 of the cutting head 30 and each axial abutment surface 36 of the cutting head, so that there is a small clearance between these bottom surfaces 20, 41 when the axial abutment surfaces 36 of the cutting head abut against the axial support surfaces 16 on the coupling legs, as illustrated in Fig 4.

In the illustrated example, each coupling leg 12 is in a conventional manner provided with an axial locking member 22 that is configured to fit, preferably with play, with a corresponding axial locking member 42 on the coupling portion 31 of the cutting head 30 when the coupling portion 31 of the cutting head is in the engagement position in the space 13 between the coupling legs 12 to thereby form an axial lock between the cutting head 30 and the tool body 2 and prevent the coupling portion 31 of the cutting head 30 from moving out of the space 13 between the coupling legs in the axial direction of the tool body 2 when being in the engagement position in this space 13. In the illustrated example, the axial locking member 22 of each coupling leg 12 is constituted by an elongated recess formed in the coupling leg on the inner side thereof, wherein the corresponding axial locking member 42 of the cutting head 30 is constituted by an external projection on the coupling portion 31 of the cutting head 30 that is configured to be received with play in said elongated recess.

According to the present invention, the upper ends 12a of the coupling legs 12 are pressed radially outwards in opposite directions by means of a force-applying implement 50 in order to move the upper ends 12a of the coupling legs 12 slightly away from each other and thereby slightly expand the space 13 between the coupling legs 12 available for the coupling portion 31 of the cutting head 30 before the cutting head 30 is rotated in relation to the tool body 2 when the cutting head 30 is to be attached to or released from the tool body 2, wherein the pressing force exerted on the coupling legs 12 by the force-applying implement 50 is maintained during the rotation of the coupling portion 31 of the cutting head 30 in said space 13 from the disengagement position to the engagement position or from the engagement position to the disengagement position to thereby keep the upper ends 12a of the coupling legs 12 in said pressed-out position during the rotation of the cutting head 30 in relation to the tool body 2. Hereby, the contact forces between the internal clamping surfaces 14 on the coupling legs 12 and the external clamping surfaces 34 on the coupling portion 31 of the cutting head 30 are reduced during the rotation of the coupling portion 31 of the cutting head 30 from the disengagement position to the engagement position or from the engagement position to the disengagement position.

The force-applying implement 50 comprises first and second male-shaped force transmitting members 51a, 51b, which are configured to fit into an upper end section 8b (see Figs 4 and 5) of a respective one of the coolant channels 8. When the force-applying implement 50 is to be used in order to apply pressing force on the coupling legs 12, the force-applying implement 50 is temporarily connected to the coupling legs 12 by inserting the first male-shaped force transmitting member 51a into the end section 8b of the coolant channel 8 in one of the coupling legs 12 through the coolant channel outlet opening 8a of this coolant channel and inserting the second male-shaped force transmitting member 51b into the end section 8b of the coolant channel 8 in the other one of the coupling legs 12 through the coolant channel outlet opening 8a of this coolant channel, whereupon the force-applying implement 50 is actuated to move the first and second force transmitting members 51a, 51b in opposite directions away from each other so that each force transmitting member 51a, 51b is pressed against the inner wall of the associated coolant channel 8 to thereby apply pressing force on the coupling legs 12 and press the upper ends 12a of the coupling legs 12 a short distance radially outwards in opposite directions.

In the illustrated example, each force transmitting member 51a, 51b has the form of a cylindrical pin with an external diameter that is smaller than the internal diameter of the end section 8b of each coolant channel 8. However, the force transmitting members 51a, 51b may also have any other suitable shape, as long as they can be inserted into the end sections 8b of the coolant channels 8 through the coolant channel outlet openings 8a.

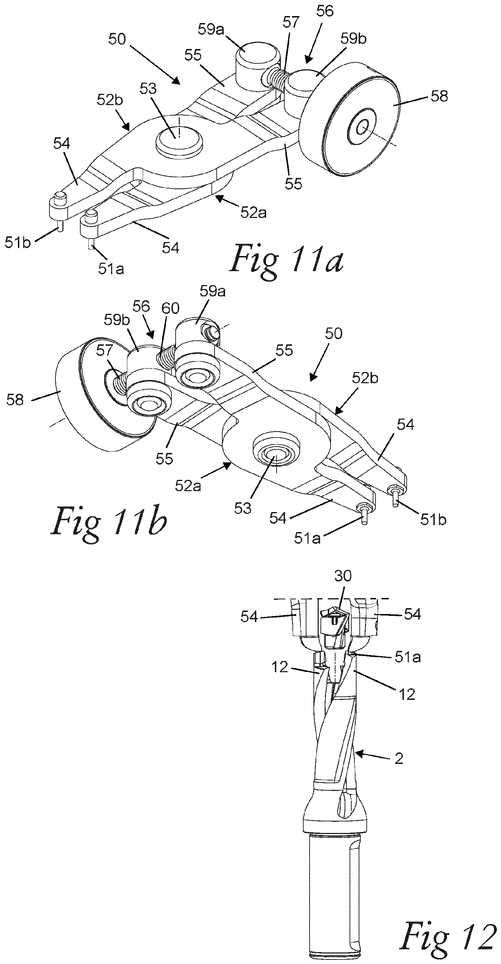

The force-applying implement 50 may for instance have the form of a pair of expanding pliers, for instance of the type illustrated in Figs 11a and 11b. In this case, the force-applying implement 50 comprises first and second levers 52a, 52b, which are pivotally connected to each other through a pivot or hinge 53, wherein each lever 52a, 52b has a front shank 54 that projects forwards from the hinge 53 and a rear shank 55 that projects rearwards from the hinge 53, wherein the front shanks 54 of the two levers 52a, 52b extend adjacent to each other on a first side of the hinge 53 and the rear shanks 55 of the two levers 52a, 52b extend adjacent to each other on an opposite second side of the hinge 53. The first force transmitting member 51a is arranged at a front end of the front shank 54 of the first lever 52a and the second force transmitting member 51b is arranged at a front end of the front shank 54 of the second lever 52a. In the illustrated example, the levers 52a, 52b cross each other at the hinge 53, which implies that the front ends of the front shanks 54, and thereby the force transmitting members 51a, 51b, are moved away from each other when the rear ends of the rear shanks 55 are moved away from each other, wherein the front ends of the front shanks 54, and thereby the force transmitting members 51a, 51b, are moved towards each other when the rear ends of the rear shanks 55 are moved towards each other. However, the force-applying implement 50 may as an alternative be designed with non-crossing levers 52a, 52b, wherein the two levers are arranged to extends adjacent to each other from the rear end of the force-applying implement 50 to the front end thereof without crossing each other. In the latter case, the force transmitting members 51a, 51b are moved away from each other when the rear ends of the rear shanks 55 are moved towards each other and moved towards each other when the rear ends of the rear shanks 55 are moved away from each other.

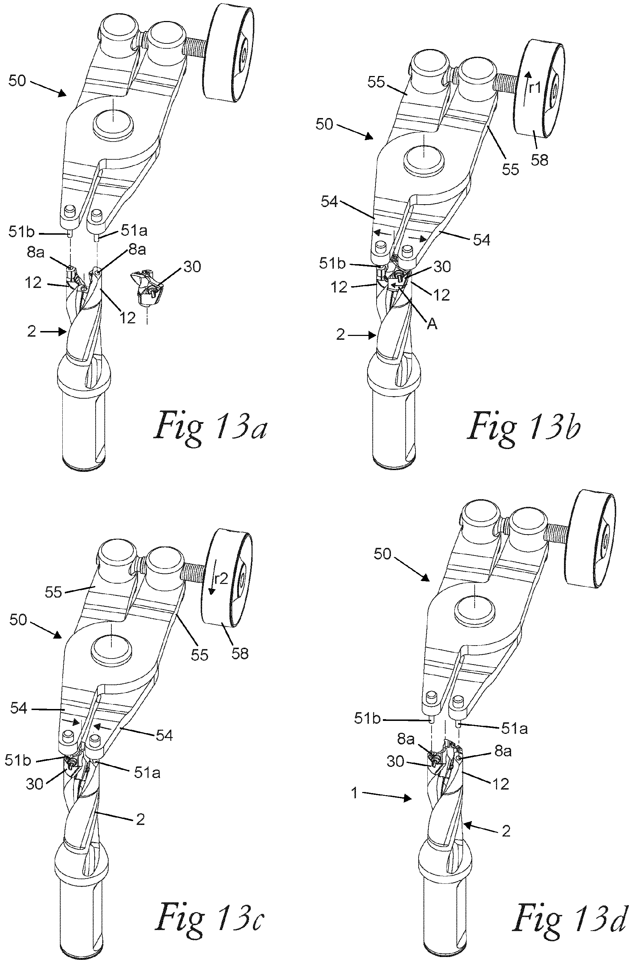

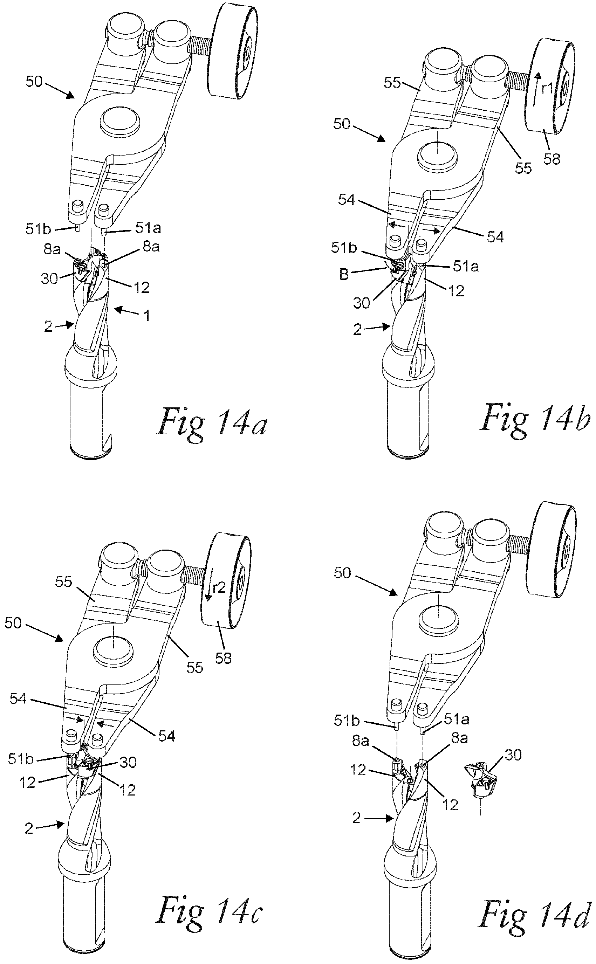

In the illustrated example, the force-applying implement 50 is actuated by means of a manually actuated screw mechanism 56, which implies that the rear ends of the rear shanks 55 are moved in relation to each other by hand power through a screw mechanism 56 included in the force-applying implement 50. The illustrated screw mechanism 56 comprises an elongated actuating shaft 57, which at a first end is rigidly fixed to an operating element 58 in the form of a knob or the similar and which at an opposite second end is rotatably connected and axially fixed to a first attachment 59a that is fixed to the rear shank 55 of the first lever 52a at the rear end thereof. Thus, the actuating shaft 57 is rotatable in relation to the first attachment 59a, but the first attachment 59a is prevented from moving axially along the actuating shaft 57. Between its first and second ends, the actuating shaft 57 extends through a threaded through hole in a second attachment 59b that is fixed to the rear shank 55 of the second lever 52b at the rear end thereof, wherein the actuating shaft 57 is provided with an external thread 60 that is in engagement with an internal thread in the through hole in the second attachment 59b. The actuating shaft 57 is rotated by manual rotation of the operating element 58 in order to move the second attachment 59b in a desired direction along the actuating shaft 57 and thereby move the rear ends of the rear shanks 55 in a desired direction in relation to each other. By rotation of the operating element 58 and the actuating shaft 57 in a first direction r1 (see Figs 13b and 14b), the rear ends of the rear shanks 55 are made to move away from each other such that the force transmitting members 51a, 51b are moved away from each other, and by rotation of the operating element 58 and the actuating shaft 57 in an opposite second direction r2 (see Figs 13c and 14c), the rear ends of the rear shanks 55 are made to move towards each other such that the force transmitting members 51a, 51b are moved towards each other. The manually actuated screw mechanism 56 may also have any other suitable design. Furthermore, the force-applying implement 50 may as an alternative be actuated in any other suitable manner, for instance by means of hydraulic power.

The force-applying implement 50 illustrated in Figs 11a and 11b is so designed that a movement of the cutting head 30 into or out of the space 13 between the coupling legs 12 is obstructed by the front shanks 54 when the force-applying implement 50 is connected to the coupling legs 12 with the force transmitting members 51a, 51b received in the end sections 8b of the coolant channels 8 in the coupling legs 12. Thus, with the use of this force-applying implement 50, the force-applying implement 50 has to be disconnected from the coupling legs 12 when a cutting head 30 is to be moved out of the space 13 between the coupling legs 12 or is to be inserted into this space 13. However, the front shanks 54 of the force-applying implement 50 may as an alternative be so designed that they do not obstruct a movement of the cutting head 30 into or out of the space 13 between the coupling legs 12 when the force-applying implement 50 is connected to the coupling legs 12 with the force transmitting members 51a, 51b received in the end sections 8b of the coolant channels 8 in the coupling legs 12, as schematically illustrated in Fig 12. In the latter case, the force-applying implement 50 may remain connected to the coupling legs 12 with the force transmitting members 51a, 51b received in the end sections 8b of the coolant channels 8 when a cutting head 30 is to be moved out of the space 13 between the coupling legs 12 or is to be inserted into this space 13.

Figs 13a-13d illustrate different steps in a process of attaching a cutting head 30 to a tool body 2 while using a force-applying implement 50 of the type described above. In a first step, the cutting head 30 is connected to the tool body 2 by inserting the coupling portion 31 of the cutting head into the space 13 between the coupling legs 12 of the tool body, whereupon the force-applying implement 50 is connected to the coupling legs 12 by inserting the first male-shaped force transmitting member 51a of the force-applying implement 50 into the end section 8b of the coolant channel 8 in one of the coupling legs 12 through the coolant channel outlet opening 8a of this coolant channel and inserting the second male-shaped force transmitting member 51b of the force-applying implement 50 into the end section 8b of the coolant channel 8 in the other coupling leg 12 through the coolant channel outlet opening 8a of this coolant channel. Thereafter, the force-applying implement 50 is actuated by rotating the operating element 58 in the above-mentioned first direction r1 (see Fig 13b) in order to move the first and second force transmitting members 51a, 51b a short distance away from each other and thereby press the upper ends 12a of the coupling legs 12 radially outwards in opposite directions such that the space 13 between the coupling legs 12 is slightly expanded. While maintaining said pressing force on the coupling legs 12 by the force-applying implement 50, the coupling portion 31 of the cutting head 30 is then rotated in relation to the tool body 2 from the above-mentioned disengagement position to the above-mentioned engagement position, as illustrated with the arrow A in Fig 13b. In the next step, the force-applying implement 50 is actuated by rotating the operating element 58 in the above-mentioned second direction r2 (see Fig 13c) in order to move the first and second force transmitting members 51a, 51b a short distance towards each other and thereby release the pressing force on the coupling legs 12. Finally, the force-applying implement 50 is disconnected from the coupling legs 12, as illustrated in Fig 13d, wherein the cutting tool 1 is ready for use.

Figs 14a-14d illustrate different steps in a process of releasing a cutting head 30 from a tool body 2 while using a force-applying implement 50 of the type described above. In a first step, the force-applying implement 50 is connected to the coupling legs 12 by inserting the first male-shaped force transmitting member 51a of the force-applying implement 50 into the end section 8b of the coolant channel 8 in one of the coupling legs 12 through the coolant channel outlet opening 8a of this coolant channel and inserting the second male-shaped force transmitting member 51b of the force-applying implement 50 into the end section 8b of the coolant channel 8 in the other coupling leg 12 through the coolant channel outlet opening 8a of this coolant channel. Thereafter, the force-applying implement 50 is actuated by rotating the operating element 58 in the above-mentioned first direction r1 (see Fig 14b) in order to move the first and second force transmitting members 51a, 51b a short distance away from each other and thereby press the upper ends 12a of the coupling legs 12 radially outwards in opposite directions such that the space 13 between the coupling legs 12 is slightly expanded. While maintaining said pressing force on the coupling legs 12 by the force-applying implement 50, the coupling portion 31 of the cutting head 30 is then rotated in relation to the tool body 2 from the above-mentioned engagement position to the above-mentioned disengagement position, as illustrated with the arrow B in Fig 14b. In the next step, the force-applying implement 50 is actuated by rotating the operating element 58 in the above-mentioned second direction r2 (see Fig 14c) in order to move the first and second force transmitting members 51a, 51b a short distance towards each other and thereby release the pressing force on the coupling legs 12. Finally, the force-applying implement 50 is disconnected from the coupling legs 12 and the cutting head 30 is removed from the tool body 2, as illustrated in Fig 14d.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A method for attaching a replaceable cutting head (30) to or releasing it from an elongated tool body (2) of a rotary cutting tool (1), wherein:
- the tool body (2) has a rear end (2b) configured for attachment to a machine and an opposite front end (2a), wherein a longitudinal centre axis (C1) of the tool body (2) extends between the rear end (2b) and the front end (2a) of the tool body (2);
- the tool body (2) at its front end (2a) has a coupling portion (11) with two coupling legs (12) projecting in the axial direction of the tool body (2) and arranged opposite to each other on opposite sides of the centre axis (C1) of the tool body (2), wherein each coupling leg (12) has an upper end (12a) with an upper end face (17), and wherein a coolant channel (8) extends axially through each coupling leg (12) and opens into the upper end face (17) of the coupling leg through a coolant channel outlet opening (8a) provided in this upper end face (17);
- the cutting head (30) has a coupling portion (31), which is designed for engagement with the coupling portion (11) of the tool body (2) and which is receivable in a space (13) between said coupling legs (12), wherein two convex external clamping surfaces (34) are provided on the coupling portion (31) of the cutting head (30) opposite to each other on opposite sides of a centre axis (C2) of the cutting head (30), wherein these external clamping surfaces (34) are configured to be in press fit engagement with an internal clamping surface (14) on an inner side of a respective one of the coupling legs (12) when the cutting head (30) is attached to the tool body (2);
- each coupling leg (12) is provided with a torque transfer surface (15) for transferring torque from the tool body (2) to the cutting head (30), which torque transfer surface (15) is configured to abut against a corresponding torque surface (35) on the cutting head (30) when the cutting head is attached to the tool body (2) with the coupling portion (31) of the cutting head received in said space (13) between the coupling legs (12); and
- the coupling portion (31) of the cutting head (30) is rotatable in said space (13) between the coupling legs (12) about the centre axis (C2) of the cutting head (30) between a disengagement position, in which the external clamping surfaces (34) on the coupling portion (31) of the cutting head (30) are disengaged from the internal clamping surfaces (14) on the coupling legs (12) and the torque surfaces (35) on the cutting head (30) are separated from the corresponding torque transfer surfaces (15) on the coupling legs (12), and an engagement position, in which the external clamping surfaces (34) on the coupling portion (31) of the cutting head (30) are in press fit engagement with the internal clamping surfaces (14) on the coupling legs (12) and the torque surfaces (35) on the cutting head (30) abut against the corresponding torque transfer surfaces (15) on the coupling legs (12),
**characterized in that** the method comprises the steps of:
a) connecting a force-applying implement (50) to the coupling legs (12) by inserting a first male-shaped force transmitting member (51a) of the force-applying implement (50) into an end section (8b) of the coolant channel (8) in one of the coupling legs (12) through the coolant channel outlet opening (8a) of this coolant channel and inserting a second male-shaped force transmitting member (51b) of the force-applying implement (50) into an end section (8b) of the coolant channel (8) in the other one of the coupling legs (12) through the coolant channel outlet opening (8a) of this coolant channel;
b) actuating the force-applying implement (50) to apply pressing force on the coupling legs (12) through the first and second force transmitting members (51a, 51b) to thereby press the upper ends (12a) of the coupling legs (12) radially outwards in opposite directions; and
c1) when the cutting head (30) is to be attached to the tool body (2), rotating the coupling portion (31) of the cutting head (30) in said space (13) between the coupling legs (12) from said disengagement position to said engagement position while maintaining said pressing force on the coupling legs (12) by the force-applying implement, and thereafter actuating the force-applying implement (50) to release the pressing force on the coupling legs (12) and disconnecting the force-applying implement (50) from the coupling legs (12), or
c2) when the cutting head (30) is to be released from the tool body (2), rotating the coupling portion (31) of the cutting head (30) in said space (13) between the coupling legs (12) from said engagement position to said disengagement position while maintaining said pressing force on the coupling legs (12) by the force-applying implement, and thereafter removing the cutting head (30) from the tool body (2) by moving the coupling portion (31) of the cutting head (30) out of said space (13) between the coupling legs (12).

2. A method according to claim 1, **characterized in that** a force-applying implement (50) in the form of a pair of expanding pliers is used as the force-applying implement (50) in said steps.

3. A method according to claim 1 or 2, **characterized in that** the force-applying implement (50) is actuated in step b by means of a manually actuated screw mechanism (56) included in the force-applying implement (50).

4. A method according to any of claims 1-3, **characterized in that** the force-applying implement (50) is configured to apply pressing force on the coupling legs (12) through the first and second force transmitting members (51a, 51b) in step b by moving the first and second force transmitting members (51a, 51b) in opposite directions away from each other.
